# EUROPEAN PATENT SPECIFICATION

(11) **EP 1 866 727 B1**
(45) Date of publication and mention of the grant of the patent: **28.12.2011**
(21) Application number: 06722884.1
(22) Date of filing: 05.04.2006
(51) Int. Cl.: G06F 1/16, A45C 13/02

(54) **A CARRYING CASE FOR ELECTRONIC EQUIPMENT AND OTHER DELICATE INSTRUMENTS**
TRAGETASCHE FÜR ELEKTRONISCHE GERÄTE UND ANDERE EMPFINDLICHE INSTRUMENTE
MALLETTE DE TRANSPORT D'ÉQUIPEMENTS ÉLECTRONIQUES ET AUTRES INSTRUMENTS FRAGILES

(30) Priority: 05.04.2005 DK 200500472; 13.06.2005 DK 200500863; 14.06.2005 US 690158 P
(43) Date of publication of application: 19.12.2007
(73) Proprietor: Umates A/S, 2690 Karlslunde (DK)
(72) Inventor: RASMUSSEN, Kim, T., 2670 Greve (DK)
(74) Representative: Plougmann & Vingtoft A/S
(86) International application number: PCT/DK2006/000192
(87) International publication number: WO 2006/105791

(56) References cited:
- DE-U1- 9 319 685
- DE-U1- 29 821 711
- US-A- 5 524 754
- US-A- 6 105 763
- US-A1- 2004 112 697
- US-A1- 2004 188 202
- US-B1- 6 257 407

## Description

The present invention relates to a carrying case for electronic equipment and other delicate instruments. The carrying case comprising, preferably, shock absorbing means for protecting the equipment against impact forces and includes a retrieving system for easy pull-out of the equipment.

### Background

Travellers often carry computers within cases specifically designed for holding the computer. Portable electronic equipment such as computers are not rugged enough to withstand being dropped or otherwise subjected to shock loading. Often the size does not leave any internal room for shock absorbing materials to protect the vulnerable parts of the equipment. Furthermore some modern electronic equipment is very fragile and comprises areas (screens, hard discs, cabinets and/or other sensible parts) which may be damaged by even low levels of pressure and/or shocks imposed by impact. Thus, various methods of arranging the equipment in the case protecting the equipment have been suggested in the prior art. It is however important that the protection of the equipment functions well with the other purposes of the case, such as for carrying papers. It is further desirable to have easy and fast access to the equipment and to be able to place the equipment securely in the bag without difficulties. US 2004/0188202 discloses a fetching structure for a carrier bag essentially comprised by a support board fixed to the inner edge of the opening of the bag, and it is assumed that the present invention provides at least an improvement thereto.

### Summary of the invention

Accordingly, the present invention relates to a carrying case for electronic equipment or other delicate instruments, comprising at least a left side wall and a right side wall, a front wall and a back wall, and retrieving means, wherein said retrieving means enables moving of the equipment relative to the walls of the carrying case,
characterized in that
the retrieving means is comprised by an internal flexible wall with a stationary end and a free end so that by pulling the free end of the internal flexible wall, the equipment is raised above the side walls of the case, and
when the stationary end of said internal flexible wall is attached to or made integral with the front or the back wall, the free end of said internal flexible wall is releasably fastened to a top wall or opening flap or to the same wall as the stationary end of said internal flexible wall, whereby fastening of said free end defines a compartment for the electronic equipment or other delicate instruments, and
when the stationary end of said internal flexible wall is attached to or made integral with a partitioning wall substantially parallel with the front or back walls the free end of said internal flexible wall is releasably fastened to a top wall or opening flap, the front wall, the back wall or the partitioning wall, whereby fastening of said free end defines a compartment for the electronic equipment or other delicate instruments and leaves open at least one residual compartment .

Said internal flexible wall together with at least one wall define a compartment for the electronic equipment or other delicate instruments.

During use of the retrieving means, the force resulting from e.g. a pulling motion on the wall may result in a bending of the wall. Bending of the wall may result in that the carrying case is folded, leaving only very limited space to retrieve the equipment. Furthermore, if the carrying case is dropped, the inertia of the equipment may bend the wall resulting in that the equipment stored in/by the retrieving means may come in contact with the bottom of the carrying case during the drop whereby the equipment may be damaged.

Thus, in the preferred embodiment, at least the wall to which the retrieving means is attached or with which it is made integral has a sufficient strength to substantially prevent bending of the wall when the retrieving means is used and/or when the carrying case e.g. is dropped.

A carrying case according to the present invention may comprise SHOCK absorbing means. These shock absorbing means is/are at least partly made of shock absorbing material.

At least a part of said internal flexible wall is preferably made of a flexible shock absorbing material.

In a preferred embodiment, at least one residual compartment is left open when the compartment housing the equipment is closed. The rest of the case may then be used for the other purposes of the case, optionally divided into two or more separate compartments.

### Drawings

The invention, and in particular preferred embodiments thereof, will be further disclosed in connection with the accompanying drawings, in which:
Figure 1 shows the case according to the invention where the internal flexible wall is fastened to the front wall and the extended opening flap is in the open position.
Figure 2 shows a side view of the case of figure 1 housing a computer, with the compartment housing the computer closed.
Figure 3 shows the lifting of a computer by pulling the free end of the internal flexible wall.
Figure 4 shows an open side view of the case during loading/unloading of a computer - or equipment in general - by use of the flexible wall which, when the free end of the flexible wall is fastened, is wrapped around the computer.
Figure 5 shows loading/unloading of a computer - or equipment in general - into/out of the compartment for housing the equipment, the loading/unloading is done by use of the flexible wall which, when the free end of the flexible wall is fastened, is wrapped around the computer.
Figure 6 shows the internal partition wall of the case when pulled out of the case, of figure 1.
Figure 7 shows schematic side view of carrying cases according to the invention comprising an internal flexible wall.
Figure 8 shows an open side view of a carrying case not according to the invention; the carrying case having a strap system.
Figure 9 shows the retrieving function of the carrying case in figure 8.
Figure 10a-d shows varying embodiments of the interior of a wall to which an internal flexible wall is attached.

The figures show possible implementations of the present invention and are not to be construed as being limiting to other possible embodiments falling within the scope of the claims.

### Detailed description of the invention

One object of the present invention is to provide a carrying case for electronic equipment or other delicate instruments capable of accommodating the equipment or other instruments secured and protected against shock loads applied to the case itself.

In the present context the term "for electronic equipment or other delicate instruments" is meant to include any kind of computers capable of being transported in a case, such as notebooks and laptops, as well as any other kind of electronic equipment, such as cameras, radios or the like. Other delicate instruments are any instruments in risk of being damaged when subjected to the acceleration forces applied to the case, if the case for example is dropped. Such instruments may be measurement instruments, telescopes or the like. In a preferred embodiment the case is adapted for computers and/or cameras. Throughout this text electronic equipment or other delicate instruments is referred to as equipment for short.

It should be mentioned that while the description of the invention may focus on carrying cases equipped with both shock absorbing means and retrieving means, and typically referred to as integrated means, the scope of the invention is intended to be broader at least in the sense that carrying cases having only retrieving means are also encompassed by the scope of the invention.

Thus, a further object of the invention is to provide a carrying case for electronic equipment with easy retrieval of the equipment. In conventional carrying cases, the user is required to retrieve the equipment by grabbing either the top or side wall(s) of the equipment which often is so positioned inside the bag that retrieval is troublesome. The carrying case according to the invention comprises retrieving means, whereby a system for easy pull out of the equipment is provided.

The carrying case is preferably designed as a conventional case, i.e. having at least a left side wall and a right side wall, a front wall and a back wall, connected to each other to form a case. In a preferred embodiment the case is provided with a bottom and a top wall as well. The terms side wall, bottom wall, front wall, back wall and top wall refer to the position of the walls when the case is carried. The walls may be connected by a seam. Alternatively, one or more walls may be made of a continuous sheet of material. For example the front, back and bottom walls may be of a continuous sheet. Also the side and bottom walls may be of a continuous sheet.

In an embodiment the case is formed by having the two side walls disposed in a substantially parallelly spaced relationship, and the front wall and the back wall disposed in a substantially parallelly spaced relationship, all four connected non-releasable to each other, whereby the four walls constitute a rigid peripheral wall for the case.

It is further intended that the bottom wall may be of rigid material and connected non-releasably to the four walls, whereby a case with high stability is formed.

In alternative embodiments at least the front wall, the back wall or a partitioning wall is made of rigid material providing the required strength.

The carrying case may comprise at least one partitioning wall substantially parallel with the front or back wall.

The top wall may be manufactured as the open part of the case, for example by hinging the top wall to at least a part of the back wall or the front wall. The top wall may be extended further to overlay with the front or back wall when closed. These overlaying parts may include means for closing and opening of the case.

In a specific embodiment the case may be formed as a backpack/rucksack including shoulder bands for carrying the case.

### Shock absorbing means

As described above, some embodiments of the invention relate to a carrying case comprising shock absorbing means for protection of the electronic equipment housed by the case.

The shock absorbing means is preferably at least partly made of a shock absorbing material, such as a resilient material or other suitable material known by a person skilled in the art. Such material may be for example Neoprene (a registered trademark of DuPont Chemical) or another synthetic rubber or other elastic material. The weight of the equipment is mainly carried by a non-resilient material, but in response to shock, the shock absorbing material stretches and the equipment is thereby protected. The shock absorbing material must provide adequate resistance not to allow the equipment to touch the bottom wall in case of shock. As described below, the shock absorbing means may be coupled to the retrieving means. Thus, the shock absorbing means may be comprised by the internal flexible wall attached to the front or back wall or to a partition substantially parallel with the front or back walls.

### Retrieving system

The invention relates to a carrying case comprising a system facilitating easy pull-out of the equipment. Often the position of the equipment in a carrying case makes it troublesome to retrieve the equipment from the case. In order to solve this problem, the carrying case of the present invention comprises retrieving means. The retrieving means is part of an internal flexible wall positioned around part of the equipment and enables easy access to the equipment by pulling the free end of the internal flexible wall whereby the equipment is lifted from its secured position within the carrying case. At least a part of the sides of the equipment is thereby raised above the sidewalls of the carrying case and is thus easy to grab from either side of the carrying case. Using the retrieving function enables moving of the equipment relative to the walls of the carrying case and the user thus has easy access to the equipment.

In the following, different embodiments of the retrieving system and the shock absorbing means is/are described as examples of the invention, although the invention is not limited to the embodiments described herein.

### Strap system

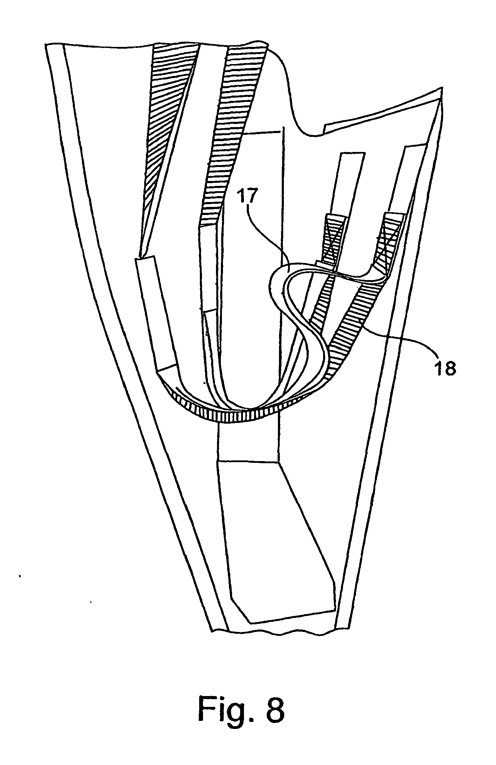

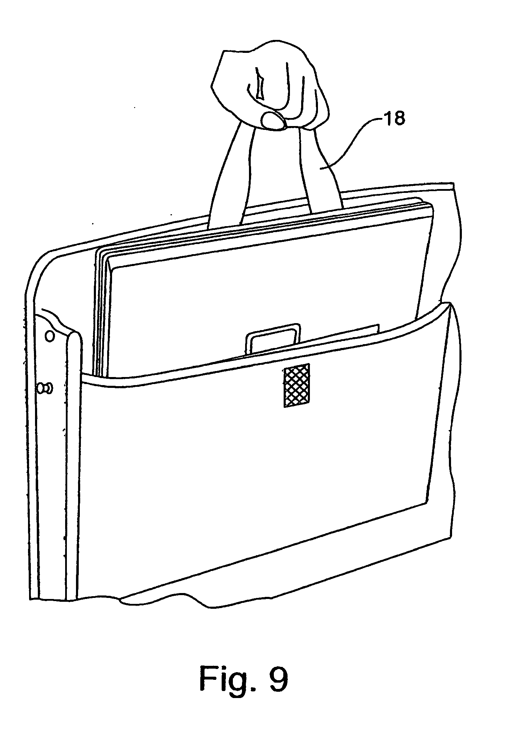

In alternative carrying cases, the retrieving means may be comprised by straps or tissue of mainly non-resilient material and the shock absorbing means comprised by straps or tissue made of mainly shock absorbing material. For optimal function of both characteristics, the retrieving means and shock absorbing means need to, be well organised. Carrying cases comprising straps or tissue as retrieving means and the illustrations thereof in figures 8 and 9 are presented not as embodiments of the invention but as examples which are useful for understanding the invention.

In such an embodiment not according to the invention, the strap system is comprised by at least one strap of shock absorbing material positioned within the equipment compartment. The at least one strap is fastened to the front wall and the back wall of the compartment and positioned at a height preventing the strap, even in its most stretched form, from reaching the bottom wall, thus forming the shock absorbing means of the carrying case. An alternative to a strap may be a tissue of shock absorbing material having the same characteristics as the straps described.

In combination with the shock absorbing means made by straps or tissue of shock absorbing material, a retrieving system may be located within the same equipment compartment. The retrieving system may preferably comprise at least one strap made of non-resilient material. The retrieving system may alternatively be made of tissue or other non-resilient material. The retrieving system is fastened to at least one wall or an edge of a wall of the equipment compartment, such as the back wall or front wall of the equipment compartment. When the retrieving system not according to the invention comprises one or more straps, said straps may be attached to the opposite wall in a loose arrangement to allow lifting of the straps as seen in figure 8, whereby the equipment may be raised as seen in figure 9.

The compartment for housing the equipment may be closed by independent securing means attached to one or more walls of the carrying case.

The shock absorbing means of the strap system may be combined with the internal flexible wall described here below. In this embodiment the internal wall may be made of non-resilient material as the shock absorbing means is/are provided by resilient straps or tissue within the equipment compartment.

### Internal flexible wall

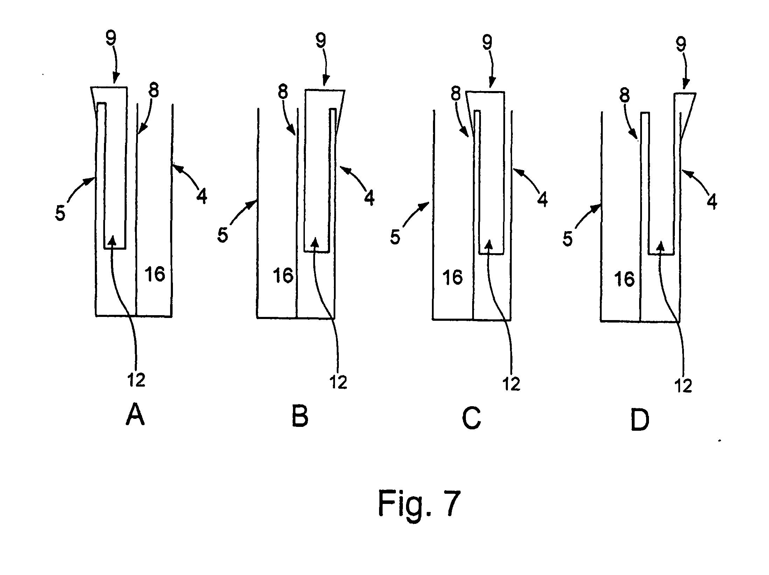

A carrying case according to the invention comprises an internal flexible wall attached to a wall substantially parallel with either the front or back wall. The internal flexible wall is preferably attached to the front wall or back wall, but may alternatively be attached to a partition wall positioned in the case, said partition wall being at least substantially parallel with the front or back wall (see figure 7). The internal flexible wall may be releasable attached to the wall to which it is attached, or it may be fixed to the wall. It is preferred that the internal flexible wall is releasably attached to the walls whereto it is attached in order to adjust the position of attachment or to remove the internal flexible wall if the case is used for other purposes.

The internal flexible wall comprises a stationary end and a free end. The stationary end may be firmly attached to a wall of the case. In a specific embodiment, the stationary end is attached at the edge of a wall. Alternatively the stationary end may be releasably attached in order to allow adjustment in relation to the wall whereto it is attached. Thereby the size of the compartment for the equipment may be adjusted by changing for example the height of attachment of the internal flexible wall.

The free end of the internal flexible wall is generally releasably attached and comprises securing means for fastening the internal flexible wall.

In a specific embodiment the internal flexible wall is releasably attached in both ends.

The free end may be fastened to the same wall to which the stationary end is attached when the internal flexible wall is attached to either the front wall or back wall of the case. Alternatively the free end may be fastened to the front wall, the back wall or a partitioning wall, when the internal flexible wall is attached to a partitioning wall.

Thus, the free end comprises securing means for fastening the free end of the internal flexible wall and thereby enclosing the equipment in the compartment. The securing means is/are preferably releasable so that the internal flexible wall may be adjusted in relation to the wall. Said securing means may also serve to fasten the internal flexible wall to the top wall or to an extension of the top wall overlaying with the front wall, if convenient.

In an embodiment the case comprises securing means for the free end of the internal flexible wall on one or more of the walls of the case.

Fastening of the free end encloses the electronic equipment in a protected compartment and leaves open at least one residual compartment.

In an alternative embodiment the internal flexible wall comprises both shock absorbing means and retrieving means, the bottom part of the internal flexible wall is comprised by two layers. One layer of shock absorbing material and one layer of non-resilient material. The outer layer comprised by the non-resilient material may be continuous with the remainder of the internal flexible wall. The resilient layer may be straps or a sheet of shock absorbing material fastened to the inside of the internal flexible wall in a position preventing the resilient layer, even in its most stretched form, from reaching the outer non-resilient layer. The stationary end and the free end may be fastened as described for the above mentioned embodiment.

### Attachment means and securing means

The shock absorbing means and retrieving means may be fastened at one or more ends through any suitable means such as fasteners comprising hook and loop type fasteners, such as Velcro (a registered trademark of Velcro Industries B.V.) tape. In an embodiment the shock absorbing means and/or retrieving means is/are fastened by a seam.

The stationary end of the internal flexible wall may be attached through any suitable means. When the stationary end is firmly attached, it may e.g. be attached by a seam. When the stationary end is releasably attached, it may be attached using any means with a releasable mechanism, such as fasteners comprising hook and loop type fasteners, such as Velcro® tape. Thereby it is possible to adjust the position of the internal flexible wall continuously.

The position of the internal flexible wall may however also be adjusted stepwise, such as by attaching the stationary end of the internal flexible wall to the walls by means of other releasable mechanisms, such as snap fasteners, hooks or the like.

In the carrying case, the length of the internal flexible wall is preferably selectively adjustable to accommodate various sizes of equipment and instruments.

The free end may be fastened by any suitable attachment means, such as through fasteners comprising hook and loop type fasteners, such as Velcro® tape. Thereby it is possible to adjust the position of the internal flexible wall continuously. By fastening the free end, the compartment enclosing the equipment is closed and the equipment is in a secured position.

In a preferred embodiment the carrying case is easily accessed from the top, and the equipment may be inserted in the pocket formed by the internal flexible wall and the surrounding walls. Before inserting the equipment, the internal flexible wall may be adjusted to accommodate and fit the equipment, such as by changing the length of the internal flexible wall and/or changing the position of the internal flexible wall in relation to the walls, so that the distance between a lower part of the internal flexible wall substantially parallel with the bottom wall and the top wall corresponds to a dimension of the equipment. Furthermore, a partition wall may be moved to adjust to another dimension of the equipment.

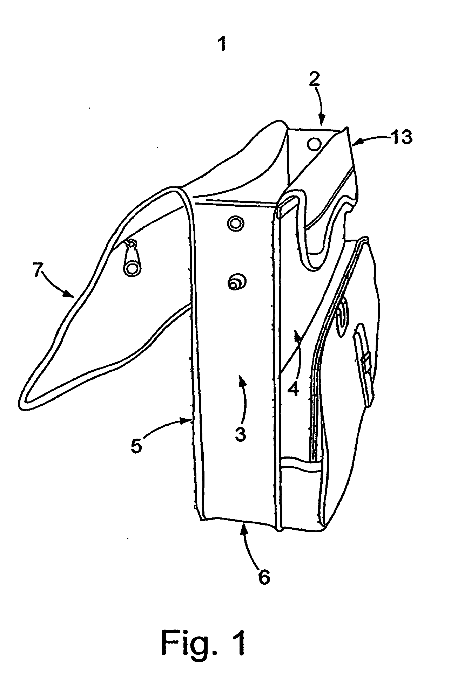

In an embodiment the carrying case is accessed from the top, and the equipment is loaded into the compartment from the top (se figure 1, 3, 4, 5 and 9).

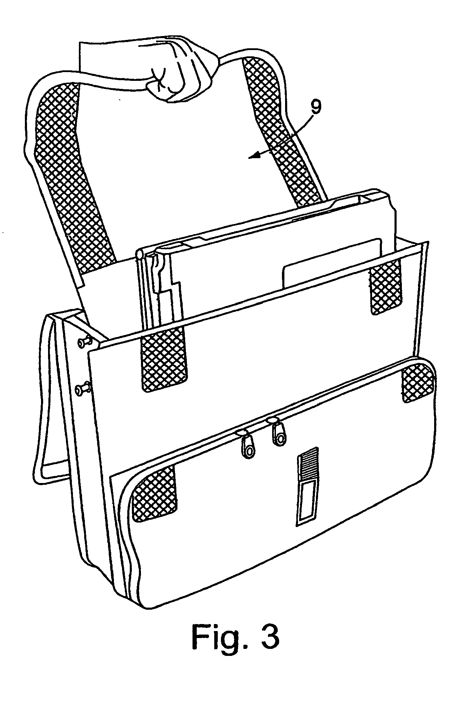

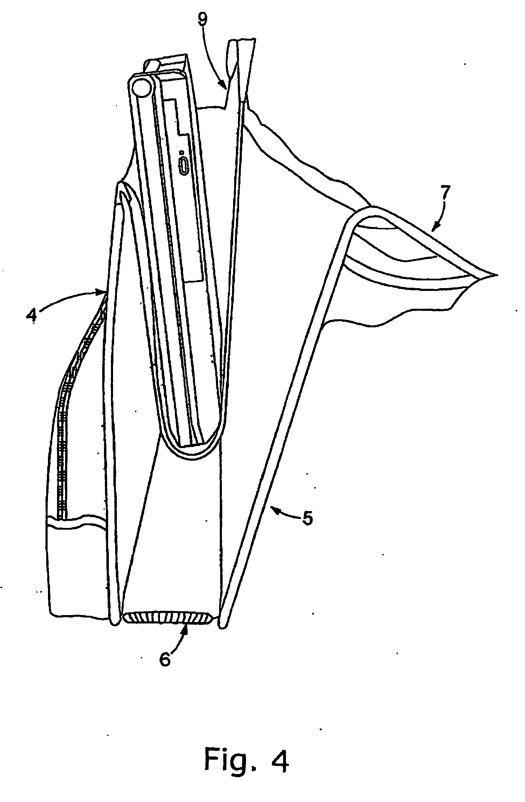

When releasing the securing means of the internal flexible wall, the equipment is easily accessible. By pulling the free end of the internal flexible wall, the equipment is raised above the side walls of the case and may thereby be reached from the side (se figures 3 and 4).

In an embodiment the securing means of the internal flexible wall is automatically opened when the case is opened to access the case.

Alternative embodiments may comprise similar fastening and attachment means as the embodiment described above. As described above straps may be firmly or loosely arranged to one or more walls of the carrying case by any suitable means. The strap may serve as handle for retrieving the equipment.

### Material

The shock absorbing means and/or retrieving means is/are at least partly made by a shock absorbing material. The shock absorbing means and retrieving means are thus made of shock absorbing and/or non-resilient materials. The shock absorbing material provides the shock absorbing function by absorbing the forces generated by shock, whereas the non-resilient material provides stability and at least part of the retrieving function.

In an embodiment the shock absorbing means and/or retrieving means is/are provided by an internal flexible wall made from a material capable of absorbing at least some of the forces when impacts are applied to the case. In a preferred embodiment at least a part of the internal flexible wall is made from a flexible material, said material for example being resilient. It is preferred that not the whole internal flexible wall is made of a shock absorbing material in order to avoid that the forces applied to the case may be passed to the equipment, for example if the internal flexible wall is so resilient that it allows the equipment to hit the bottom of the case during an impact.

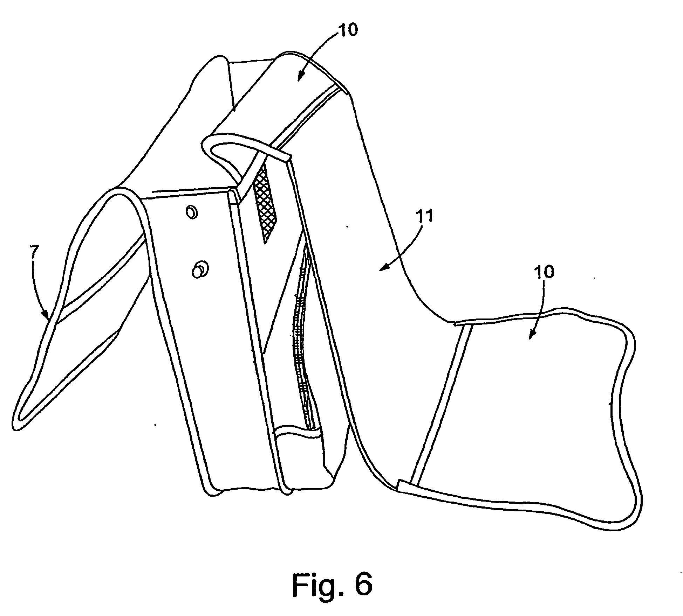

In a preferred embodiment the internal flexible wall comprises two internal flexible wall parts being made from a flexible, substantially non-resilient material. The remaining part of the internal flexible wall is preferably made from a shock absorbing material (figure 6). One part of the internal flexible wall made of non-resilient material is the part attached to a wall of the case and having a length shorter than the side length of the equipment to be carried. The second part made of non-resilient material is used for securing the free end of the flexible wall. In this context the term "resilient" is used in its normal meaning, i.e. allowing stretching of the material with subsequent retraction to substantially return to the position that the internal flexible wall had before stretching. The shock absorbing material may preferably be a synthetic rubber, preferably such as Neoprene®.

In a further preferred embodiment the internal flexible wall comprises one continuous wall part made of flexible, substantially non-resilient material and at least a second part made from a shock absorbing material.

The material for the carrying case may be selected based on strength and appearance. Suitable materials for the outer covering are leathers and synthetic polymers, such as nylons.

The internal material of the walls of the carrying case must provide strength and flexibility at appropriate positions. At least one wall should comprise a strong internal material such as carton or plastic material, preferably the front wall, the back wall or a partitioning wall comprises a strong internal material. In a preferred embodiment the back wall comprises plastic as internal material.

### Equipment compartment

A compartment for the electronic equipment may be defined by the walls of the carrying case, the front wall, back wall or a partitioning wall in combination with the side walls, bottom walls and top walls. Part of shock absorbing means and/or retrieving means may participate in defining the compartment.

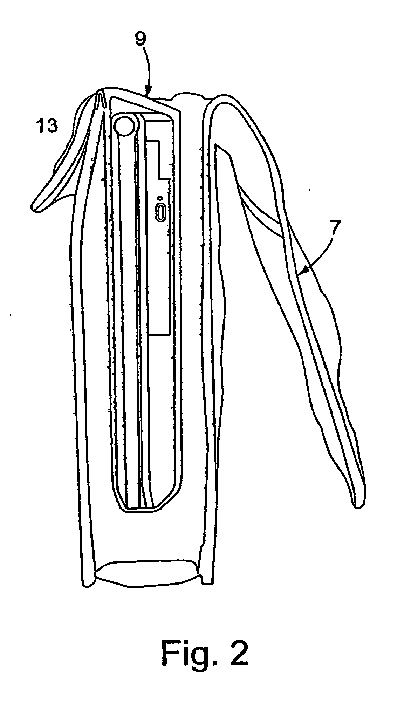

In an embodiment of the invention, a compartment for the electronic equipment or other delicate instruments is defined by the internal flexible wall together with at least one wall of the carrying case. Normally the compartment will be defined by the internal flexible wall, a part of the side walls, a part of the rear wall or a part of the front wall. When closed, the internal flexible wall also serves as top and bottom walls of the compartment (see figure 2).

### Further compartments

The case may be divided into several compartments by the use of partition walls. In one embodiment the carrying case according to the invention comprises at least one partition wall. The internal flexible wall may be attached to either of the walls of the case being a back, a front or a partitioning wall, and capable of being secured to one or more walls of the case.

In another embodiment, the carrying case according to the invention comprises at least two partition walls.

The partition wall(s) may be stationary walls or they may be movable within the case or even capable of being removed from the case. Preferably the partition wall(s) is/are movable, so that the size of the compartment between the walls, between which the internal flexible wall is attached, is adjustable. Each partition wall may individually be stepwise movable for example by arranging a slide or the like in the bottom wall and the top wall of the case, said slide comprising recesses for receiving the partition wall. In another embodiment each partition wall may individually be continuously movable on a slide leading to a more easily adjusted compartment.

In cases where the case is accessible from the top, the partition walls may be arranged in slides on the back wall and the front wall, whereby said slides may be as discussed above.

### Reference signs

1. carrying case
2. left side wall
3. right side wall
4. front wall
5. back wall
6. bottom wall
7. top wall - opening flap
8. partition wall
9. internal flexible wall
10. non-resilient part(s)
11. resilient part
12. compartment
13. shock absorbing means
14. closing means
15. computer (equipment)
16. residual compartment
17. strap (shock absorbing means)
18. strap (retrieving means being not an embodiment of the invention)

### Detailed description of drawings

Figure 1 shows the carrying case 1 in a form wherein the case is accessible from the top. The case has a left side wall 2 and a right side wall 3, as well as a front wall 4. Furthermore, the case 1 has a back wall 5, a bottom wall 6 and an extended top wall 7 for closing of the case. An internal flexible wall 9 is attached to the front wall 4 and secured to the outside of the same wall by shock absorbing means 13 using Velcro® tape attached to the free end and the front wall. The case is shown with the compartment 12 for holding the computer in the closed (secured) position and with the residual compartment in the open position. The compartment 12 is defined by the internal flexible wall 9, the front wall 4 and part of the side walls 2 and 3. In order to secure any equipment arranged in the compartment 12, the internal flexible wall 9 is secured on the outside of the front wall by shock absorbing means 13. Apart from the compartment 12, the case 1 may comprise residual compartment or compartments 16' or 16". The size of the residual compartment(s) depends on the necessary size of the compartment 12. The residual compartment(s) may be used for accessories to the equipment or other belongings of the user.

Figure 2 shows an open side view of the case 1 of figure 1, with the compartment 12 holding the equipment (here a computer 15) exposed. The computer is held in the compartment 12 formed by the internal flexible wall attached to the front wall and to be fastened by securing means 13 on the outside of the front wall.

Figure 3 shows the case 1 of figure 1, wherein a computer 15 is being retrieved from the compartment 12 by pulling the free end of the internal flexible wall 9. Once the shock absorbing means 13 is released, the internal flexible wall 9 is raised and the computer may easily be taken out of the compartment.

Figure 4 shows the case 1 where a side wall has been excised to view the interior of the case during loading or unloading of the computer. The compartment 12 is formed by the front wall and the internal flexible wall. By pulling the internal flexible wall, the computer may easily be taken out. By folding the internal flexible wall 9 around the computer 15 and the upper edge of the front wall 4, the compartment 12 may be closed and the computer placed securely in the compartment.

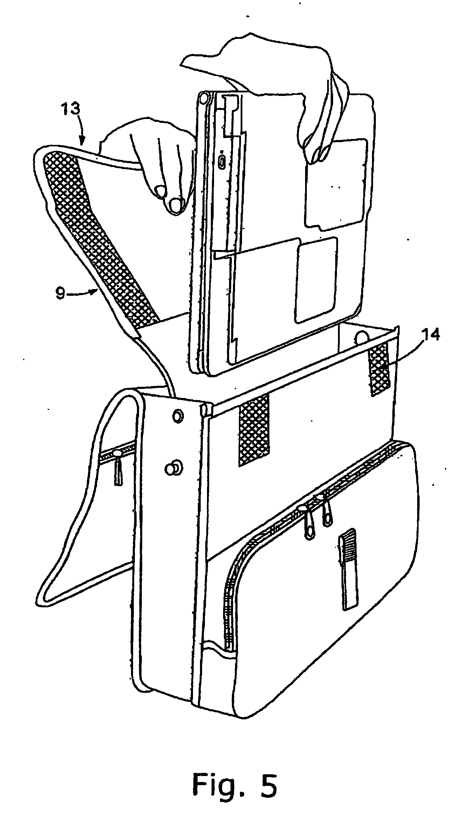

Figure 5 shows the case 1 of figure 1, where a computer 15 is being positioned in the compartment 12. Once the computer 15 is inserted, the free end 13 of the internal flexible wall 9 is folded around the front wall 4 and fastened thereto by securing means 14 thus forming the compartment 12. The compartment is thereby adapted to the size of the computer 15.

In figure 6 the internal flexible wall 9 of the case shown in figure 1 is shown in greater detail. The internal flexible wall 9 is pulled out of the case 1 showing the resilient 11 and non-resilient parts 10 of the internal flexible wall. The flexible wall absorbs all impacts on the case 1 before they are transferred to equipment in the case 1.

Figure 7 shows schematic side views of several embodiments of a carrying case according to the invention. The cases are shown without a top wall (opening flap) for clarity. The figure shows different attachment possibilities of the internal flexible wall. The internal flexible wall 9 may be attached to the back wall 5 (A), the front wall 4 (B), or alternatively to a partition wall 8 (C and D) inside the case. In the latter example the free end of the internal flexible wall may be fastened to the partitioning wall (C) or alternatively the front wall (D) or back wall (not shown). The compartment 12 is for housing the computer 15.

The partitioning wall 8 with the flexible wall 9 may be made as an insertion to be inserted into a carrying case. Thus, such an insertion may provide a carrying case, which is not manufactured with retrieving and/or shock absorbing means beforehand, to be equipped with such means. In this case, the insertion will preferably comprise a substantially rigid wall similar to the partitioning wall 8. The flexible wall 9 will at one end (the stationary end) either be made integral with or releasable attached to the top of the substantially rigid wall. The flexible wall 9 has, at its other end (the free end), fastening means allowing it to be releasable attached to either a wall of the carrying case or to the substantially rigid wall as shown in figure 7. The stiffness of the substantially rigid wall is selected so that its strength is sufficient to allow retrieval of a device housed in the compartment 12 and/or to allow the shock absorbing means to take up shock occurring during normal use of the carrying case.

More than one insertion may be provided in a carrying case e.g. for providing easy retrieval of more than one computer or for the carrying of different kinds of electronic equipment.

Figure 8 shows an open side view of a carrying case not according to the invention, the case comprising a strap system. The shock absorbing means is/are provided with the two straps 17 of shock absorbing material fastened to the front and back walls of the carrying case. The retrieving means is/are provided by an additional strap 18 made of non-resilient material. This is fastened to the front wall below the shock absorbing straps and is loosely attached to the back wall through a casing.

Figure 9 shows the retrieving function of the carrying case displayed in figure 8. By pulling the strap 18, the computer 15 is raised from the compartment and may easily be taken out of the carrying case.

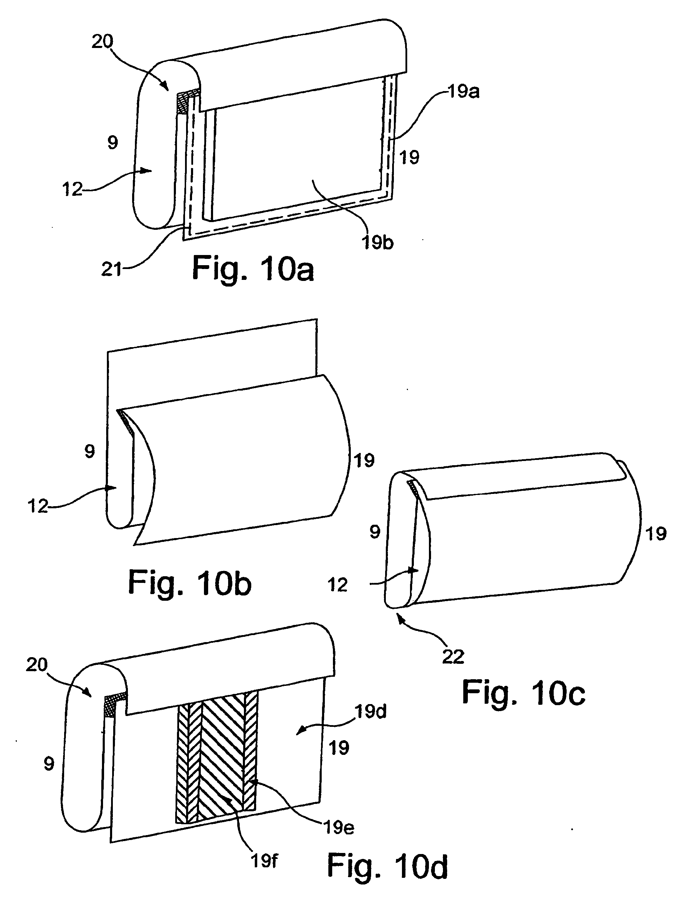

The material - or composition of materials - of the wall to which the internal flexible wall 9 is attached to or made integral with should preferably be so rigid as to provide a sufficient strength to avoid bending. In figure 10a a wall 19 to which the internal flexible wall 9 is attached is shown. The attachment of the flexible wall 9 to the wall 19 is indicated by the cross hatching 20. The wall 19 comprises a rim 19a having smaller thickness than the part 19b. The wall is made integral with the carrying case preferably by stitching the rim 19a to the carrying case as indicated by the dotted lines 21. The wall 19 may be covered by fabric or leather to at least visually cover the wall 19 once it is integrated in a carrying case.

As indicated above, the strength of the wall 19 should prevent bending of the wall at least when the retrieval system is used. Retrieval comprises pulling in the flexible wall 9 thereby lifting the computer or the like housed in the compartment 12 out of the carrying case. This pulling action may introduce a force at position 20 tending to bend the wall 19. If the wall 19 is not sufficiently stiff to withstand the bending force, the wall 19 may bend as indicated in figure 10b rendering it difficult to retrieve the computer or the like housed in the compartment 12.

Furthermore, the strength of the wall 19 should preferably also be sufficient to prevent bending in case the carrying case e.g. is dropped. If the wall 19 is not sufficiently strong, a bending as shown in figure 10c may occur where the bottom of the compartment 12 touches the bottom of the carrying case at position 22 (see figure 10c) whereby the impact applied to the carrying case e.g. during a drop is transferred to the equipment stored in the compartment 12.

The wall is preferably made of polypropylene, polyethylene, cardboard, aluminium, plywood, a glass and/or carbon fibre composition or the like. The embodiment shown in figure 10b is composed by a honey comb structure constituting at least a part of part 19b. The part 19b is preferably glued to e.g. a plastic plate having a larger area than the part 19b in order to provide the rim 19a.

Figure 10d shows a further embodiment of the wall 19. In this embodiment the wall 19 comprises a base wall element 19d in the form of a plastic plate to which three supporting elements 19e and 19f are attached. The supporting element 19f is typically a honey comb structure and the two elements 19e are typically aluminium elements.

## Claims

1. A carrying case (1) for electronic equipment (15) or other delicate instruments, comprising at least a left side wall (2) and a right side wall (3), a front wall (4) and a back wall (5), and retrieving means, wherein said retrieving means enables moving of the equipment (15) relative to the walls of the carrying case (1),
**characterized in that**
the retrieving means is comprised by an internal flexible wall (9) with a stationary end and a free end so that by pulling the free end of the internal flexible wall (9), the equipment (15) is raised above the side walls (2,3) of the case (1), and
when the stationary end of said internal flexible wall (9) is attached to or made integral with the front or the back wall (4,5), the free end of said internal flexible wall (9) is releasably fastened to a top wall (7) or opening flap or to the same wall as the stationary end of said internal flexible wall (9), whereby fastening of said free end defines a compartment (12) for the electronic equipment (15) or other delicate instruments, and
when the stationary end of said internal flexible wall (9) is attached to or made integral with a partitioning wall (8) substantially parallel with the front or back walls, the free end of said internal flexible wall (9) is releasably fastened to a top wall (7) or opening flap, the front wall (4), the back wall (5) or the partitioning wall (8), whereby fastening of said free end defines a compartment (12) for the electronic equipment (15) or other delicate instruments and leaves open at least one residual compartment (16).

2. A carrying case (1) according to claim 1, wherein at least the wall to which the retrieving means (9) is attached to or made integral with has a sufficient strength to substantially prevent bending of the wall when the retrieving means (9) is used.

3. A carrying case (1) according to claim 2, wherein the wall to which the retrieving means (9) is attached to or made integral with comprises a rim (19a) having a smaller thickness than the remaining part of the wall.

4. A carrying case (1) according to claim 3, wherein the wall to which the retrieving means (9) is attached to or made integral with comprises a composition comprising a sheet material and a strength-providing part.

5. A carrying case (1) according to claim 4, wherein the strength-providing part comprises a honey comb structure, sheet of ply wood, sheet of aluminium, or the like.

6. A carrying case (1) according to any of the preceding claims, wherein the retrieving means is at least partly made of a shock absorbing material.

7. A carrying case (1) according to any of the preceding claims further comprising shock absorbing means.

8. A carrying case (1) according to claim 7, wherein the shock absorbing means is/are at least partly made of a shock absorbing material.

9. A carrying case (1) according to any of the preceding claims, wherein at least the front wall (4), the back wall (5) or a partitioning wall (8) is made of rigid material.

10. A carrying case (1) according to any of the preceding claims, wherein the two side walls (2,3), the front wall (4) and the back wall (5) form a rigid peripheral wall of the case.

11. A carrying case (1) according to claims 6 or 7-10 when dependent on claim 6 or 8, wherein the shock absorbing material is a synthetic rubber.

12. A carrying case (1) according to any of the claims 7-11 when dependent on claim 6 or 8, wherein the shock absorbing material is Neoprene®.

13. A carrying case (1) according to any of the preceding claims, comprising at least one partition wall (8).

14. A carrying case (1) according to any of claims 7-13 when dependant on claim 7, wherein the shock absorbing means is comprised by the internal flexible wall (9).

15. A carrying case (1) according to claim 14, wherein at least a part of the internal flexible wall (9) is made from a shock absorbing material.

16. A carrying case (1) according to any of the preceding claims, wherein the free end of the internal flexible wall (9) is fastened to the same wall to which the stationary end is attached.

17. A carrying case (1) according any of the preceding claims, wherein the internal flexible wall (9) comprises at least two parts made from non-resilient material.

18. A carrying case (1) according to any of the preceding claims, wherein the attachment of the internal flexible wall (9) is selectively adjustable to accommodate various sizes of equipment and instruments (15).

19. A carrying case (1) according to any of the preceding claims, wherein the attachment of both ends of the internal flexible wall (9) is adjustable.

20. A carrying case (1) according to any of the claims 1-18, wherein only the free end of the internal flexible wall (9) is adjustable and releasably fastened.

21. A carrying case (1) according to any of the preceding claims, wherein one or more ends of the internal flexible wall (9) is fastened through fasteners comprising hook and loop type fasteners.

22. A carrying case (1) according to claim 21, wherein the fasteners comprise Velcro® tape.

23. A carrying case (1) according to any of the claims 18-22, wherein the adjustable attachment of the internal flexible wall (9) is provided stepwise.

24. A carrying case (1) according to any of the claims 18-22, wherein the adjustable attachment of the internal flexible wall (9) is provided variable.

25. A carrying case (1) according to any of claims 1-15 or 17-24, wherein the internal flexible wall (9) is solely attached to or made integral with the front wall (4), the back wall (5) or a second partitioning wall at its stationary end.

26. A carrying case (1) according to any of the preceding claims, where the case (1) is a back-pack.

27. A carrying case (1) according to any of the preceding claims, wherein at least one partition wall (8) is movable within the case (1).

28. A carrying case (1) according to claim 27, wherein the partition wall (8) is stepwise movable within the case (1).

29. A carrying case (1) according to any of the previous claims, comprising two or more partition walls (8).

30. An insertion for a carrying case (1), **characterized in that** the insertion comprises an internal flexible wall (9) with a stationary end and a free end, wherein the free end comprises fastening means for fastening the free end to a wall of the carrying case (1) or to an upper part of a retrieval device so as to define a compartment (12) for electronic equipment (15) or other delicate instruments in such a manner that a device comprised in the compartment (12) is retrieved from the compartment by pulling the free end of the internal flexible wall (9).

31. A insertion according to claim 30, further comprising a substantially rigid wall whereto the stationary end is attached to or made integral with at the top of the substantially rigid wall.

## Patentansprüche

1. Transportgehäuse (1) für elektronische Ausrüstung (15) oder andere empfindliche Instrumente, umfassend mindestens eine linke Seitenwandung (2) und eine rechte Seitenwandung (3), eine vordere Wandung (4) und eine hintere Wandung (5) und Rückholmittel, wobei das Rückholmittel das Bewegen der Ausrüstung (15) im Verhältnis zu den Wandungen des Transportgehäuses (1) ermöglicht,
**dadurch gekennzeichnet, dass**
das Rückholmittel eine innere flexible Wandung (9) mit einem stationären Ende und einem freien Ende umfasst, sodass die Ausrüstung (15) durch Ziehen an dem freien Ende der inneren flexiblen Wandung über die Seitenwandungen (2,3) des Gehäuses (1) angehoben wird, und
das freie Ende der inneren flexiblen Wandung (9) lösbar an einer oberen Wandung (7) oder Öffnungslasche oder an derselben Wandung wie das stationäre Ende der inneren flexiblen Wandung (9) angebracht ist, wenn das stationäre Ende der inneren flexiblen Wandung (9) an der vorderen oder hinteren Wandung (4,5) befestigt oder einstückig damit ausgebildet ist, wodurch durch das Anbringen des freien Endes ein Fach (12) für die elektronische Ausrüstung (15) oder andere empfindliche Instrumente festgelegt wird, und
das freie Ende der inneren flexiblen Wandung (9) lösbar an einer oberen Wandung (7) oder Öffnungslasche, der vorderen Wandung (4), der hinteren Wandung (5) oder der Trennwandung (8) angebracht ist, wenn das stationäre Ende der inneren flexiblen Wandung (9) an einer im Wesentlichen zu der vorderen oder hinteren Wandung parallelen Trennwandung (8) befestigt oder einstückig damit ausgebildet ist, wodurch durch das Anbringen des freien Endes ein Fach (12) für die elektronische Ausrüstung (15) oder andere empfindliche Instrumente festgelegt wird und mindestens ein Restfach (16) offen gelassen wird.

2. Transportgehäuse (1) nach Anspruch 1, wobei mindestens die Wandung, an der das Rückholmittel (9) befestigt oder einstückig damit ausgebildet ist, eine ausreichende Festigkeit aufweist, um ein Biegen der Wandung bei der Verwendung des Rückholmittels (9) im Wesentlichen zu verhindern.

3. Transportgehäuse (1) nach Anspruch 2, wobei die Wandung, an der das Rückholmittel (9) befestigt oder einstückig damit ausgebildet ist, einen Rand (19a) mit einer ähnlichen Dicke wie der übrige Teil der Wandung umfasst.

4. Transportgehäuse (1) nach Anspruch 3, wobei die Wandung, an der das Rückholmittel (9) befestigt oder einstückig damit ausgebildet ist, eine Zusammensetzung, umfassend ein Bogenmaterial und einen Festigkeit bereitstellenden Teil umfasst.

5. Transportgehäuse (1) nach Anspruch 4, wobei der Festigkeit bereitstellen Teil eine Wabenstruktur, eine Sperrholzplatte, eine Aluminiumplatte oder dergleichen umfasst.

6. Transportgehäuse (1) nach einem der vorhergehenden Ansprüche, wobei das Rückholmittel mindestens teilweise aus stoßdämpfendem Material hergestellt ist.

7. Transportgehäuse (1) nach einem der vorhergehenden Ansprüche, weiterhin umfassend stoßdämpfende Mittel.

8. Transportgehäuse (1) nach Anspruch 7, wobei das oder die stoßdämpfende(n) Mittel mindestens teilweise aus einem stoßdämpfenden Material hergestellt ist/sind.

9. Transportgehäuse (1) nach einem der vorhergehenden Ansprüche, wobei mindestens die vordere Wandung (4), die hintere Wandung (5) oder eine Trennwandung (8) aus einem steifen Material hergestellt ist.

10. Transportgehäuse (1) nach einem der vorhergehenden Ansprüche, wobei die beiden Seitenwandungen (2,3), die vordere Wandung (4) und die hintere Wandung (5) eine steife periphere Wandung des Gehäuses bilden.

11. Transportgehäuse (1) nach Anspruch 6 oder 7-10, wenn sich diese auf Anspruch 6 oder 8 beziehen, wobei das stoßdämpfende Material ein synthetischer Gummi ist.

12. Transportgehäuse (1) nach einem der Ansprüche 7-11, wenn sich diese auf Anspruch 6 oder 8 beziehen, wobei das stoßdämpfende Material Neoprene® ist.

13. Transportgehäuse (1) nach einem der vorhergehenden Ansprüche, umfassend mindestens eine Trennwandung (8).

14. Transportgehäuse (1) nach einem der Ansprüche 7-13, wenn sich diese auf Anspruch 7 beziehen, wobei das stoßdämpfende Mittel von der inneren flexiblen Wandung (9) umfasst ist.

15. Transportgehäuse (1) nach Anspruch 14, wobei mindestens ein Teil der inneren flexiblen Wandung (9) aus stoßdämpfendem Material hergestellt ist.

16. Transportgehäuse (1) nach einem der vorhergehenden Ansprüche, wobei das freie Ende der inneren flexiblen Wandung (9) an derselben Wandung angebracht ist, an der auch das stationäre Ende befestigt ist.

17. Transportgehäuse (1) nach einem der vorhergehenden Ansprüche, wobei die innere flexible Wandung (9) mindestens zwei Teile aus nicht elastischem Material umfasst.

18. Transportgehäuse (1) nach einem der vorhergehenden Ansprüche, wobei die Befestigung der inneren flexiblen Wandung (9) selektiv einstellbar ist, um Ausrüstung und Instrumente (15) in verschiedenen Größen aufzunehmen.

19. Transportgehäuse (1) nach einem der vorhergehenden Ansprüche, wobei die Befestigung der beiden Enden der inneren flexiblen Wandung (9) einstellbar ist.

20. Transportgehäuse (1) nach einem der Ansprüche 1-18, wobei nur das freie Ende der inneren flexiblen Wandung (9) einstellbar und lösbar angebracht ist.

21. Transportgehäuse (1) nach einem der vorhergehenden Ansprüche, wobei ein oder mehrere Enden der inneren flexiblen Wandung (9) mit Befestigungsmitteln, umfassend Befestigungsmittel vom Klettverschlusstyp, angebracht sind.

22. Transportgehäuse (1) nach Anspruch 21, wobei die Befestigungsmittel Velcro®-Band umfassen.

23. Transportgehäuse (1) nach einem der Ansprüche 18-22, wobei die einstellbare Befestigung der inneren flexiblen Wandung (9) stufenweise bereitgestellt ist.

24. Transportgehäuse (1) nach einem der Ansprüche 18-22, wobei die einstellbare Befestigung der inneren flexiblen Wandung (9) variable bereitgestellt ist.

25. Transportgehäuse (1) nach einem der Ansprüche 1-15 oder 17-24, wobei die innere flexible Wandung (9) nur mit dem stationären Ende an der vorderen Wandung (4), der hinteren Wandung (5) oder einer zweiten Trennwandung befestigt oder einstückig damit ausgebildet ist.

26. Transportgehäuse (1) nach einem der vorhergehenden Ansprüche, wobei das Gehäuse (1) ein Rucksack ist.

27. Transportgehäuse (1) nach einem der vorhergehenden Ansprüche, wobei mindestens eine Trennwandung (8) im Gehäuse (1) beweglich ist.

28. Transportgehäuse (1) nach Anspruch 27, wobei die Trennwandung (8) im Gehäuse (1) stufenweise beweglich ist.

29. Transportgehäuse (1) nach einem der vorhergehenden Ansprüche, umfassend zwei oder mehr Trennwandungen (8).

30. Einschub für ein Transportgehäuse (1), **dadurch gekennzeichnet, dass** der Einschub eine innere flexible Wandung (9) mit einem stationären Ende und einem freien Ende umfasst, wobei das freie Ende Befestigungsmittel zum Befestigen des freien Endes an einer Wandung des Transportgehäuses (1) oder an einem oberen Teil einer Rückholvorrichtung umfasst, um so ein Fach (12) für elektronische Ausrüstung (15) oder andere empfindliche Instrumente derart festzulegen, dass eine in dem Fach (12) enthaltene Vorrichtung durch Ziehen an dem freien Ende der inneren flexiblen Wandung (9) aus dem Fach herausgeholt wird.

31. Einschub nach Anspruch 30, weiterhin umfassend eine im Wesentlichen steife Wandung, wobei das stationäre Ende an dem oberen Ende der im Wesentlichen steifen Wandung befestigt oder einstückig damit ausgebildet ist.

## Revendications

1. Mallette de transport (1) pour un équipement (15) électronique ou d'autres instruments délicats, comprenant au moins une paroi latérale gauche (2) et une paroi latérale droite (3), une paroi avant (4) et une paroi arrière (5), et un moyen de récupération, ledit moyen de récupération permettant de déplacer l'équipement (15) par rapport aux parois de la mallette de transport (1),
**caractérisée en ce que**
le moyen de récupération est composé d'une paroi souple interne (9) comportant une extrémité fixe et une extrémité libre si bien qu'en tirant l'extrémité libre de la paroi souple interne (9), l'équipement (15) est soulevé au-dessus des parois latérales (2, 3) de la mallette (1), et
quand l'extrémité fixe de ladite paroi souple interne (9) est fixée ou intégrée à la paroi avant ou arrière (4, 5), l'extrémité libre de ladite paroi souple interne (9) est fixée de manière détachable à une paroi supérieure (7) ou un rabat ouvrant ou à la même paroi que l'extrémité fixe de ladite paroi souple interne (9), si bien que la fixation de ladite extrémité libre définit un compartiment (12) pour l'équipement (15) électronique ou d'autres instruments délicats, et
quand l'extrémité fixe de ladite paroi souple interne (9) est fixée ou intégrée à une paroi de séparation (8) essentiellement parallèle à la paroi avant ou arrière, l'extrémité libre de ladite paroi souple interne (9) est fixée de manière détachable à une paroi supérieure (7) ou un rabat ouvrant, la paroi avant (4), la paroi arrière (5) ou la paroi de séparation (8), si bien que la fixation de ladite extrémité libre définit un compartiment (12) pour l'équipement (15) électronique ou d'autres instruments délicats et laisse ouvert au moins un compartiment résiduel (16).

2. Mallette de transport (1) selon la revendication 1, dans laquelle au moins la paroi à laquelle le moyen de récupération (9) est fixé ou intégré est suffisamment résistante pour essentiellement empêcher la paroi de se plier quand le moyen de récupération (9) est utilisé.

3. Mallette de transport (1) selon la revendication 2, dans laquelle la paroi à laquelle le moyen de récupération (9) est fixé ou intégré comprend un bord (19a) moins épais que la partie restante de la paroi.

4. Mallette de transport (1) selon la revendication 3, dans laquelle la paroi à laquelle le moyen de récupération (9) est fixé ou intégré comprend une composition comprenant un matériau en feuille et une partie apportant de la résistance.

5. Mallette de transport (1) selon la revendication 4, dans laquelle la partie apportant de la résistance comprend une structure en nid d'abeilles, une feuille de contreplaqué, une feuille d'aluminium ou similaire.

6. Mallette de transport (1) selon l'une quelconque des revendications précédentes, dans laquelle le moyen de récupération est au moins en partie constitué d'un matériau absorbant les chocs.

7. Mallette de transport (1) selon l'une quelconque des revendications précédentes comprenant également un/des moyen(s) d'absorption des chocs.

8. Mallette de transport (1) selon la revendication 7, dans laquelle le(s) moyen(s) d'absorption des chocs est/sont au moins en partie constitué(s) d'un matériau absorbant les chocs.

9. Mallette de transport (1) selon l'une quelconque des revendications précédentes, dans laquelle au moins la paroi avant (4), la paroi arrière (5) ou une paroi de séparation (8) est constituée d'un matériau rigide.

10. Mallette de transport (1) selon l'une quelconque des revendications précédentes, dans laquelle les deux parois latérales (2, 3), la paroi avant (4) et la paroi arrière (5) forment une paroi périphérique rigide de la mallette.

11. Mallette de transport (1) selon les revendications 6 ou 7 à 10 si elles dépendent de la revendication 6 ou 8, dans laquelle le matériau absorbant les chocs et un caoutchouc synthétique.

12. Mallette de transport (1) selon l'une quelconque des revendications 7 à 11 si elles dépendent de la revendication 6 ou 8, dans laquelle le matériau absorbant les chocs est du Néoprène®.

13. Mallette de transport (1) selon l'une quelconque des revendications précédentes, comprenant au moins une paroi de séparation (8).

14. Mallette de transport (1) selon l'une quelconque des revendications 7 à 13 si elles dépendent de la revendication 7, dans laquelle le moyen d'absorption des chocs est constitué de la paroi souple interne (9).

15. Mallette de transport (1) selon la revendication 14, dans laquelle au moins une partie de la paroi souple interne (9) est constituée d'un matériau absorbant les chocs.

16. Mallette de transport (1) selon l'une quelconque des revendications précédentes, dans laquelle l'extrémité libre de la paroi souple interne (9) est fixée à la même paroi que celle à laquelle est fixée l'extrémité fixe.

17. Mallette de transport (1) selon l'une quelconque des revendications précédentes, dans laquelle la paroi souple interne (9) comprend au moins deux parties constituées d'un matériau non résilient.

18. Mallette de transport (1) selon l'une quelconque des revendications précédentes, dans laquelle la fixation de la paroi souple interne (9) est réglable de façon sélective pour s'adapter à différentes tailles d'équipements et d'instruments (15).

19. Mallette de transport (1) selon l'une quelconque des revendications précédentes, dans laquelle la fixation des deux extrémités de la paroi souple interne (9) est réglable.

20. Mallette de transport (1) selon l'une quelconque des revendications 1 à 18, dans laquelle seule l'extrémité libre de la paroi souple interne (9) est réglable et fixée de manière détachable.

21. Mallette de transport (1) selon l'une quelconque des revendications précédentes, dans laquelle une ou plusieurs extrémités de la paroi souple interne (9) sont fixées au moyen de fixations comprenant des fermetures auto-agrippantes.

22. Mallette de transport (1) selon la revendication 21, dans laquelle les fixations comprennent des bandes Velcro®.

23. Mallette de transport (1) selon l'une quelconque des revendications 18 à 22, dans laquelle la fixation réglable de la paroi souple interne (9) fonctionne par étapes.

24. Mallette de transport (1) selon l'une quelconque des revendications 18 à 22, dans laquelle la fixation réglable de la paroi souple interne (9) fonctionne de manière variable.

25. Mallette de transport (1) selon l'une quelconque des revendications 1 à 15 ou 17 à 24, dans laquelle la paroi souple interne (9) est uniquement fixée ou intégrée à la paroi avant (4), la paroi arrière (5) ou une deuxième paroi de séparation au niveau de son extrémité fixe.

26. Mallette de transport (1) selon l'une quelconque des revendications précédentes, dans laquelle la mallette (1) est un sac à dos.

27. Mallette de transport (1) selon l'une quelconque des revendications précédentes, dans laquelle au moins une paroi de séparation (8) est déplaçable à l'intérieur de la mallette (1).

28. Mallette de transport (1) selon la revendication 27, dans laquelle la paroi de séparation (8) est déplaçable par étapes à l'intérieur de la mallette (1)

29. Mallette de transport (1) selon l'une quelconque des revendications précédentes, comprenant au moins deux parois de séparation (8).

30. Élément à insérer pour une mallette de transport (1), **caractérisé en ce que** l'élément à insérer comprend une paroi souple interne (9) comportant une extrémité fixe et une extrémité libre, dans lequel l'extrémité libre comprend un moyen de fixation pour fixer l'extrémité libre à une paroi de la mallette de transport (1) ou à une partie supérieure d'un dispositif de récupération afin de définir un compartiment (12) pour un équipement (15) électronique ou d'autres instruments délicats de manière à ce qu'un dispositif situé dans le compartiment (12) puisse être retiré du compartiment en tirant l'extrémité libre de la paroi souple interne (9).

31. Élément à insérer selon la revendication 30, comprenant également une paroi essentiellement rigide à laquelle l'extrémité fixe est fixée ou intégrée au niveau de la partie supérieure de la paroi essentiellement rigide.
